# EUROPÄISCHE PATENTANMELDUNG

(11) **EP 3 925 722 A1**
(43) Veröffentlichungstag der Anmeldung: **22.12.2021**
(21) Anmeldenummer: 21178587.8
(22) Anmeldetag: 09.06.2021
(51) Int. Cl.: B23D 55/08, B23D 55/00

(54) **VERFAHREN ZUM VORHERSAGEN DER RESTLEBENSDAUER EINES SÄGEBANDS UND BANDSÄGEMASCHINE**

(30) Priorität: 18.06.2020 DE 102020116150
(71) Anmelder: KEURO Besitz GmbH & Co. EDV-Dienstleistungs KG, 77855 Achern (DE)
(72) Erfinder: Stolzer, Armin, 76530 Baden-Baden (DE); Krebber, Sönke Florian, 76530 Baden-Baden (DE)
(74) Vertreter: Lemcke, Brommer & Partner Patentanwälte Partnerschaft mbB

(57) **Zusammenfassung**

Die Erfindung betrifft ein Verfahren zum Vorhersagen der Restlebensdauer eines Sägebands 5 in einer Bandsägemaschine, wobei das Verhalten oder Eigenschaften des in der Sägemaschine eingespannten Sägebands 5 während des Betriebs der Sägemaschine mittels mindestens einer Sensoreinrichtung überwacht werden, und wobei anhand von Messsignalen der Sensoreinrichtung festgestellte Änderungen des Verhaltens oder von Eigenschaften des Sägebands über die Zeit für eine Prognose über den Zeitpunkt eines Bandabrisses verwendet werden. Mit der mindestens einen Sensoreinrichtung wird das Verhalten oder Eigenschaften des Sägebands 5 über ein Detektieren von Veränderungen an Bauteilen der Sägemaschine, die mit dem Sägeband 5 in Wirkverbindung stehen, indirekt überwacht.

## Beschreibung

Die Erfindung betrifft ein Verfahren zum Vorhersagen der Restlebensdauer eines Sägebands in einer Bandsägemaschine nach dem Oberbegriff des Anspruchs 1 sowie eine Bandsägemaschine mit einem um mindestens zwei Laufräder umlaufenden, zwischen diesen gespannten Sägeband sowie mit einer Spanneinrichtung für das Sägeband, die auf mindestens eines der Laufräder einwirkt und durch Verändern des Abstands zwischen den Laufrädern die Spannung des Sägebands im Wesentlichen konstant hält.

Ein Verfahren der vorliegenden Art ermöglicht, die Restlebensdauer des Sägebands einer Bandsägemaschine vorherzusagen, indem das Verhalten oder ausgewählte Eigenschaften des in der Sägemaschine eingespannten Sägebands während des Betriebs der Sägemaschine mittels mindestens einer Sensoreinrichtung überwacht werden. Änderungen des Verhaltens oder der ausgewählten Eigenschaften des Sägebands über die Zeit können anhand von Messsignalen der Sensoreinrichtung festgestellt werden, und solche Änderungen werden für eine Prognose über den wahrscheinlichen bzw. frühesten Zeitpunkt eines Bandabrisses verwendet.

In einer Bandsägemaschine der vorliegenden Art muss das umlaufende Sägeband gespannt werden, um ein einwandfreies Sägeergebnis erzielen zu können. Das um mindestens zwei, typischerweise genau zwei Laufrollen umlaufende Sägeband wird mittels eines verstellbaren Laufrads gespannt, d. h. nach dem Auflegen des Sägebands auf die Laufräder wird das verstellbare Laufrad nach außen verfahren, um das Sägeband zu spannen. Insbesondere bei Metallsägen muss die Bandspannung wegen des hohen Schneidwiderstands der Werkstücke unter eine verhältnismäßig hohe mechanische Spannung gesetzt werden.

Während des Betriebs ist das Sägeband insbesondere aufgrund der Biegewechselbelastung beim Umlenken des Sägebandes um die Laufräder unter Spannung hohen mechanischen Beanspruchungen ausgesetzt. Da die Ebene des gewünschten Sägeschnitts im Werkstück in der Regel nicht parallel zu den Achsen der Laufräder steht, muss das Sägeband, vom Laufrad kommend, darüber hinaus in die Schnittebene hineingedreht und nach Verlassen des Schneidbereichs wieder aus der Schnittebene heraus gedreht werden. Letzteres erfolgt mittels Bandführungen, an denen zusätzliche Biegewechselbelastungen auftreten.

Die mechanischen Belastungen des Sägebandes führen mit der Zeit zu Materialermüdung, die sich in Mikrorissen im Bandmaterial zeigen, wobei deren Anzahl und Länge mit der Zeit ansteigt, bis das Sägeband reisst, vornehmlich unter Belastung.

Ein Bandabriss während eines Sägevorgangs sollte allerdings vermieden werden, da bei einem Bandabriss unter Belastung die Unfallgefahr besonders hoch ist, da das Werkstück beschädigt werden kann und da mitunter ein gerissenes Sägeband nicht mehr aus dem Schnittkanal entfernt werden kann. Es besteht daher Bedarf an einer Prognose vor Beginn eines Sägevorgangs, ob das Sägeband den nächsten Sägevorgang, der bei Metallsägen typischerweise mehrere Minuten, mitunter jedoch auch ein bis zwei Stunden dauert, ohne Bandabriss überstehen wird.

Dieser Bedarf, die Restlebensdauer des Sägebands vorherzusagen, wird bei einem automatischen Sägebetrieb noch deutlich verschärft. Es liegt auf der Hand, dass beispielsweise ein Bandabriss zu Beginn einer Nachtschicht, in der mannlos gesägt werden soll, alleine durch den dadurch verursachten langen Stillstand der Produktion große Schäden verursachen kann.

Eine Vorhersage der Restlebensdauer eines Sägebands anhand von typischen Sägeband-Lebensdauern und bereits durchgeführten Sägevorgängen liefert, wie die Erfahrung zeigt, kaum brauchbare Ergebnisse, da die Streuung der Bandlebensdauern aufgrund von Fertigungstoleranzen auch innerhalb einer Menge von typgleichen Sägebändern stark variiert.

Auch ein regelmäßiges Inspizieren des Sägebands auf sichtbare Risse hat sich als nicht praktikabel herausgestellt, zumal hierzu die Produktion unterbrochen werden müsste.

Es ist daher in der DE 10 2018 118 369 A1 vorgeschlagen worden, die Restlebensdauer eines Sägebands in einer Bandsägemaschine vorherzusagen, indem das Schwingungsverhalten des in der Sägemaschine eingespannten Sägebands während des Betriebs der Sägemaschine mittels eines induktiven, kapazitiven, taktilen oder optischen Sensors überwacht wird. Einige Zeit vor einem Bandabriss scheint sich die Schwingungsbewegung des Sägebands innerhalb von ausgewählten Frequenzbereichen zu verstärken, sodass das Erkennen von entsprechenden Änderungen des Schwingungsverhaltens ein Warnsignal für einen bevorstehenden Bandabriss auslöst.

Das Schwingungsverhalten eines Sägebands während des Betriebs wird allerdings durch viele verschiedene Einflussgrößen und Randbedingungen beeinflusst. Es ist daher nicht ohne weiteres reproduzierbar, wie sich aus einer Amplitudenänderung der Bandschwingungen die Restlebensdauer des Sägebands vorhersagen lässt. Schwingungseffekte, die auf die zu erfassende Materialermüdung zurückzuführen sind, werden durch Schwingungen und Schwingungsänderungen überlagert, die andere Ursachen haben.

Hinzu kommt, dass ein Sensor zur Überwachung des Schwingungsverhaltens des in der Sägemaschine eingespannten Sägebands während des Betriebs der Sägemaschine aufgrund der rauen Umgebungsbedingungen störanfällig und wartungsintensiv ist oder eine kostenintensive Sonderanfertigung sein muss.

Der vorliegenden Erfindung liegt daher die Aufgabe zugrunde, ein Verfahren zum Vorhersagen der Restlebensdauer eines Sägebands in einer Bandsägemaschine nach dem Oberbegriff des Anspruchs 1 sowie eine Bandsägemaschine nach dem Oberbegriff des Anspruchs 10 vorzuschlagen, die das Überwachen des Verhaltens oder von Eigenschaften des in der Sägemaschine eingespannten Sägebands auf andere Weise ermöglichen und hierbei mit einer robusten und unkomplizierten Sensorik realisierbar sind.

Gelöst ist diese Aufgabe durch ein Verfahren mit den Merkmalen des Anspruchs 1 sowie durch eine Bandsägemaschine mit den Merkmalen des Anspruchs 10.

Bevorzugte Ausgestaltungen des erfindungsgemäßen Verfahrens finden sich in den Ansprüchen 2 bis 9; vorteilhafte Weiterbildungen der erfindungsgemäßen Bandsägemaschine sind in den Ansprüchen 11 bis 15 niedergelegt.

Gemäß der vorliegenden Erfindung wird für das Verfahren zum Vorhersagen der Restlebensdauer eines Sägebands in einer Bandsägemaschine wie bisher das Verhalten oder ausgewählte Eigenschaften des in der Sägemaschine eingespannten Sägebands während des Betriebs der Sägemaschine mittels mindestens einer Sensoreinrichtung überwacht, und es werden anhand von Messsignalen der Sensoreinrichtung festgestellte Änderungen des Verhaltens oder von Eigenschaften des Sägebands über die Zeit für eine Prognose über den Zeitpunkt eines Bandabrisses verwendet. Während im Stand der Technik eine Eigenschaft des Sägebands - das Schwingungsverhalten - mittels einer Sensoreinrichtung direkt überwacht wird, um eine Prognose über den Zeitpunkt eines Bandabrisses zu erstellen, erfolgt erfindungsgemäß ein indirektes Überwachen des Sägebands, d. h. es werden Bauteile der Sägemaschine überwacht, welche ihrerseits mit dem Sägeband in Wirkverbindung stehen, und zwar indem Veränderungen an solchen Bauteilen der Sägemaschine mit der mindestens einen Sensoreinrichtung detektiert werden. Aus den entsprechenden Messdaten kann dann auf das Verhalten oder die ausgewählten Eigenschaften des Sägebands geschlossen werden.

Dieses neue Konzept einer Überwachung des Verhaltens oder von Eigenschaften des Sägebands während des Betriebs ermöglicht, eine robuste und unkomplizierte Sensorik zu verwenden, was beim direkten Überwachen des Schwingungsverhaltens des Sägebands nicht möglich ist. Vor allem jedoch ermöglicht die erfindungsgemäße Herangehensweise eine eindeutigere Datengrundlage für die Prognose eines Bandabrisses bzw. für die Vorhersage der Restlebensdauer des Sägebands, da indirekt Verhaltensweisen oder Eigenschaften des Sägebands überwacht werden können, auf die bedeutend weniger Einflussgrößen einwirken als auf das Schwingungsverhalten des Sägebands.

Die erfindungsgemäße Bandsägemaschine mit einem um mindestens zwei Laufräder umlaufenden, zwischen diesen gespannten Sägeband und einer Spanneinrichtung für das Sägeband, die auf mindestens eines der Laufräder einwirkt und durch Verändern des Abstands zwischen den Laufrädern die Spannung des Sägebands im Wesentlichen konstant hält, umfasst erfindungsgemäß eine Sensoreinrichtung zum Detektieren von Veränderungen an Bauteilen der Sägemaschine, die mit dem Sägeband direkt oder indirekt in Wirkverbindung stehen, womit die Sensoreinrichtung zur Durchführung des erfindungsgemäßen Verfahrens geeignet ist. Eine Auswerteeinheit zum Auswerten von detektierten Messwerten und Generieren eines Warnhinweises oder zum Ausgeben einer Prognose ist ebenfalls Teil der erfindungsgemäßen Bandsägemaschine.

Eine besonders vorteilhafte Möglichkeit zur Umsetzung des erfindungsgemäßen Verfahrens besteht darin, eine Längung des Sägebands zu überwachen, indem diese indirekt erfasst wird. Denn Versuche der Anmelderin haben ergeben, dass sich Sägebänder eines bestimmten Typs und einer bestimmten Dimension im Betrieb zwar unterschiedlich schnell längen, jedoch das Maß der Längung bis zu einem Bandabriss - jeweils bei konstant gehaltener Bandspannung - in einem gegenüber der Streuung der Längungsgeschwindigkeit deutlich schmaleren Bereich liegt. Es reicht also aus, einige Versuche mit Sägebändern eines bestimmten Typs durchzuführen, um einen Grenzwert der Längung zu identifizieren, bei dessen Erreichen mit hoher Wahrscheinlichkeit ein Bandabriss innerhalb eines vorgegebenen Zeitintervalls erfolgen wird bzw. unterhalb dessen mit hoher Wahrscheinlichkeit nicht mit einem Bandabriss gerechnet werden muss. Die übliche Streuung in der Gesamtlebensdauer von Sägebändern eines bestimmten Typs hat darauf keinen relevanten Einfluss. Da diese Streuung erfahrungsgemäß innerhalb eines Bereichs von +/- 50% liegt, bietet die erfindungsgemäße Prognose große Vorteile.

Besonders vorteilhaft kann die Längung des Sägebands - gemäß der vorliegenden Erfindung indirekt - über eine Wegveränderung an einer Spanneinrichtung für das Sägeband überwacht bzw. detektiert werden. Da das Sägeband bei einer Längung nachgespannt wird, indem eine Laufrolle mittels einer Spanneinrichtung zunehmend weiter nach außen bewegt wird, genügt es, diese Wegveränderung an der Spanneinrichtung ganz einfach zu überwachen, beispielsweise mit einem kostengünstigen und robusten Wegsensor, insbesondere mindestens einem Drehgeber, Seilzuggeber oder Dehnmessstreifen. Wenn die Spanneinrichtung elektromotorisch verstellt wird, kann auch ein als Elektromotor mit Positionsgeber ausgestalteter Antrieb als Sensoreinrichtung verwendet werden, sodass die Wegveränderung an der Spanneinrichtung ohne zusätzliche Sensorik, sondern durch Verwendung des Positionsgebers des Elektromotors überwacht werden kann.

Eine andere, besonders vorteilhafte Realisierung der erfindungsgemäßen Verfahrensweise besteht in der Überwachung einer Bandführungseinrichtung, wobei Veränderungen einer Spannung in der Bandführungseinrichtung oder eine elastische Verformung der Bandführungseinrichtung detektiert werden.

Die Bandführungseinrichtung verdreht, wie eingangs beschrieben, das Sägeband vor und nach dem Sägebereich und muss daher die entsprechenden Rückstellkräfte des gespannten Sägebands aufnehmen. Eine Veränderung der Rückstellkräfte des Sägebands kann, wie Versuche der Anmelderin gezeigt haben, auf einen bevorstehenden Bandabriss hinweisen. Dies ist dann regelmäßig der Fall, wenn die Veränderung der Rückstellkräfte sich beschleunigt, d. h. die Torsionsspannung des Sägebands beschleunigt abnimmt.

Die Veränderung einer Spannung in einer Bandführungseinrichtung oder einer elastischen Verformung der Bandführungseinrichtung kann wiederum ganz einfach mittels Wegsensoren, insbesondere mittels mindestens eines Dehnmessstreifens, oder mittels Kraftmessgebern überwacht werden, die allesamt einfache und robuste Messwertgeber sind.

Durch Überwachen von unterschiedlichen Bauteilen der Sägemaschine, die mit dem Sägeband in Wirkverbindung stehen, können somit unterschiedliche Eigenschaften des Sägebands indirekt überwacht werden, insbesondere eine Längung, vorzugsweise durch Überwachen der Spanneinrichtung oder von deren Antriebsmechanik, oder eine Torsionsspannung, vorzugsweise durch Überwachen von Spannungen und/oder elastischen Verformungen von Bandführungseinrichtungen. Hierbei hat sich herausgestellt, dass es Absolutgrenzwerte für Wegveränderungen, Spannungsänderungen oder elastischen Verformungen gibt, bei deren Erreichen statistisch von einer bestimmten Mindest-Restlebensdauer ausgegangen werden kann. Daneben gibt es Relativgrenzwerte von Veränderungen an den detektierten Bauteilen, d. h. Grenzwerte für eine zunehmende Geschwindigkeit der Veränderungen, bei deren Erreichen ebenso von einer bestimmten Mindest-Restlebensdauer des Sägebands ausgegangen werden kann. Diese Zusammenhänge sind sowohl bei der Längung des Sägebands als auch bei der Abnahme von dessen Torsionsspannung zu beobachten.

Insofern kann mit der erfindungsgemäßen Sensoreinrichtung eine Wegveränderung an der Spanneinrichtung für das Sägeband überwacht werden, wobei beim Erreichen eines vorbestimmten Absolutgrenzwertes einer zurückgelegten Wegstrecke, die wegen der konstanten Bandspannung der Längung des Sägebands entspricht, oder beim Erreichen eines vorbestimmten Relativgrenzwertes der Wegveränderung ein Warnhinweis generiert wird. Dieser kann direkt ausgegeben oder in der elektronischen Datenverarbeitung der Bandsägemaschine oder des Betreibers zu einer Prognose weiterverarbeitet werden.

Die erfindungsgemäße Sensoreinrichtung kann alternativ oder zusätzlich auch eine Veränderung der Spannung in der Bandführungseinrichtung oder einer elastischen Verformung der Bandführungseinrichtung überwachen, um die abnehmende Torsionsspannung des Sägebands zu erkennen. Bei einem vorbestimmten Relativgrenzwert für die Veränderung und/oder bei Erreichen eines vorbestimmten Absolutgrenzwertes der elastischen Verformung oder Spannung kann wiederum ein Warnhinweis generiert werden, der als solcher ausgegeben oder an die EDV der Bandsägemaschine oder des Betreibers ausgegeben wird, um eine Prognose abgeben zu können.

Der vorbestimmte Absolutgrenzwert einer zurückgelegten Wegstrecke an der Spanneinrichtung und/oder der elastischen Verformung der Bandführungseinrichtung oder der Spannung in der Bandführungseinrichtung wird vorzugsweise durch eine Versuchsreihe mit Sägebändern desselben Typs und derselben Abmessungen bei konstanter Bandspannung im Leerlaufbetrieb bis zum Bandabriss typ- und abmessungsspezifisch als unterer Wert der Wegstrecke oder der elastischen Verformung oder der Spannung ermittelt, unterhalb dem mit einer definierten Wahrscheinlichkeit, beispielsweise von 90% kein Bandabriss erfolgt.

In entsprechender Weise kann der vorbestimmte Relativgrenzwert der Wegveränderung oder für die Veränderung der Spannung in der Bandführungseinrichtung oder für die Veränderung der elastischen Verformung der Bandführungseinrichtung durch eine Versuchsreihe mit Sägebändern desselben Typs und derselben Abmessungen bei konstanter Bandspannung im Leerlaufbetrieb bis zum Bandabriss typ-und abmessungsspezifisch als unterer Wert der Veränderung ermittelt werden, unterhalb dem mit einer definierten Wahrscheinlichkeit, beispielsweise von 90% kein Bandabriss erfolgt.

Anhand der beigefügten Zeichnungen werden im folgenden Ausführungsbeispiele für ein erfindungsgemäßes Verfahren sowie eine erfindungsgemäß ausgestattete Bandsägemaschine beschrieben und erläutert. Es zeigen:
- Figur 1: eine schematische Ansicht einer Bandsägemaschine;
- Figur 2: eine schematische Darstellung einer Spanneinrichtung der Bandsägemaschine gemäß Figur 1;
- Figur 3: eine schematische Darstellung einer Bandführungseinrichtung der Bandsäge gemäß Figur 1;
- Figur 4: Messkurven eines Versuchs mit mehreren typgleichen Sägebändern, gemessen an der Spannungseinrichtung der Bandsägemaschine;
- Figur 5: Messdiagramme eines Versuchs mit mehreren typgleichen Sägebändern, gemessen an einer Bandführungseinrichtung.

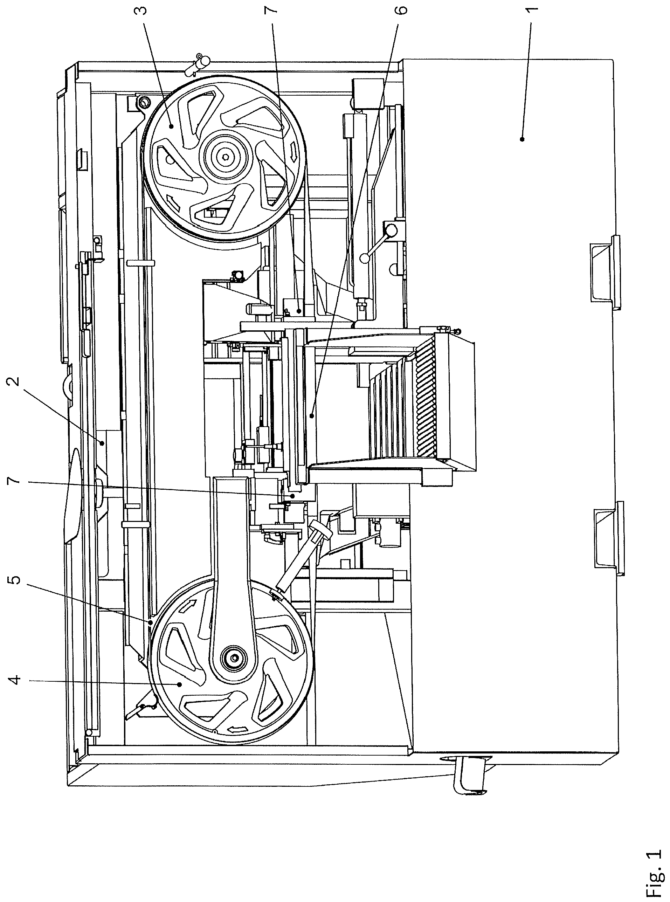

Figur 1 zeigt schematisch eine Bandsägemaschine mit einem Sägenunterteil 1, auf das ein zu sägendes Werkstück aufgelegt wird, und einem Sägenoberteil 2, das relativ zum Sägenunterteil auf und ab beweglich ist. Im Sägenoberteil 2 sind zwei Laufräder 3, 4, und zwar ein feststehendes Laufrad 3 und ein in diesem Fall horizontal bewegliches Laufrad 4 angeordnet, von denen wenigstens eines angetrieben ist. Um diese Laufräder 3, 4 ist ein Sägeband 5 gespannt. Um die Sägebewegung durchzuführen, läuft es um die beiden Laufräder 3, 4 um.

In einem Sägebereich 6, in dem das Sägeband 5 durch Absenken des Sägenoberteils 2 auf ein Werkstück trifft, wird das Sägeband 5 mittels zweier Bandführungseinrichtungen 7 aus einer Umlaufbewegungsebene, die parallel zu den Achsen der Laufräder 3, 4 steht und vorliegend horizontal orientiert ist, in eine Schnittebene gedreht, die vorliegend vertikal orientiert ist. Sowohl am verstellbaren Laufrad 4 als auch an den Bandführungseinrichtungen 7 sind erfindungsgemäß Sensoreinrichtungen vorgesehen, wie nachfolgend näher ausgeführt wird.

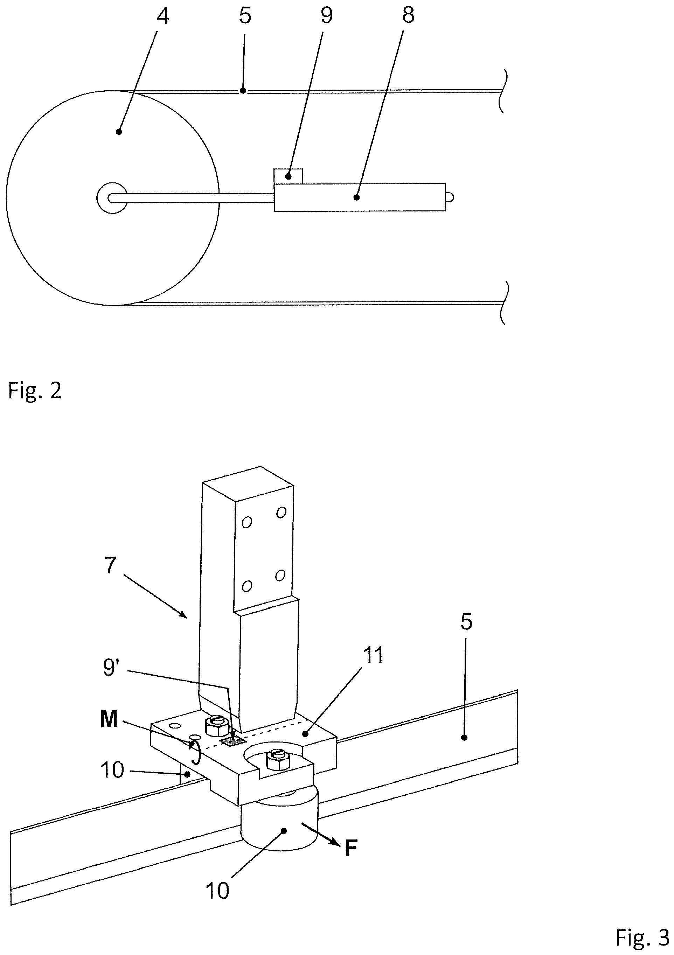

Figur 2 zeigt ein Detail aus Figur 1, und zwar das verstellbare Laufrad 4 für das Sägeband 5 und eine zugehörige Spanneinrichtung 8. Diese besteht vorliegend aus einer Kolben-Zylinder-Einheit, um das verstellbare Laufrad 4 hydraulisch nach außen zu bewegen und mit einem vorgegebenen Hydraulikdruck zu halten, sodass das Sägeband 5 mit einer konstanten Spannung gespannt wird. Wenn sich das Sägeband 5 längt, stellt sich das Laufrad 4 wegen des auf die Spanneinrichtung 8 wirkenden hydraulischen Drucks so weit nach, bis die Spannung des Sägebands 5 wieder den Sollwert erreicht hat.

An der Spanneinrichtung 8, genauer an der Kolben-Zylinder-Einheit, befindet sich ein Wegsensor 9, der beispielsweise als Seilzuggeber ausgebildet sein kann und den Zylinder mit einer Achse des Laufrads 4 verbindet, um den Betrag der Wegstrecke zu überwachen, die das Laufrad 4 beim Nachspannen zurücklegt. Auch die Veränderung einer mittleren Geschwindigkeit der Nachstellbewegung könnte so überwacht werden.

Figur 3 ist eine Detaildarstellung einer der beiden Bandführungseinrichtungen 7 der Sägemaschine aus Figur 1. Diese Bandführungseinrichtung 7 besteht aus zwei Bandführungsrollen 10, die auf einer Seitenfläche des Sägebands 5 abrollen und die die zur Verdrehung des Sägebands 5 notwendigen Kräfte auf dieses übertragen, sowie eine Halteplatte 11, an der die Bandführungsrollen 10 gehalten und gelagert sind. Aufgrund der Rückstellkraft des Sägebands 5 gegen die durch die Bandführungsrollen 10 bewirkte Verdrehung wirkt ein Drehmoment M auf die Halteplatte 11, das eine geringe elastische Verformung der Halteplatte 11 verursacht. Eine Veränderung dieser Verformung, die insbesondere durch eine Abnahme der Torsionsspannung des Sägebands 5 und somit einer Abnahme des Drehmoments M verursacht wird, kann mittels eines Wegsensors 9, der hier als Dehnmessstreifen ausgebildet und an der Halteplatte 11 angebracht ist, detektiert werden.

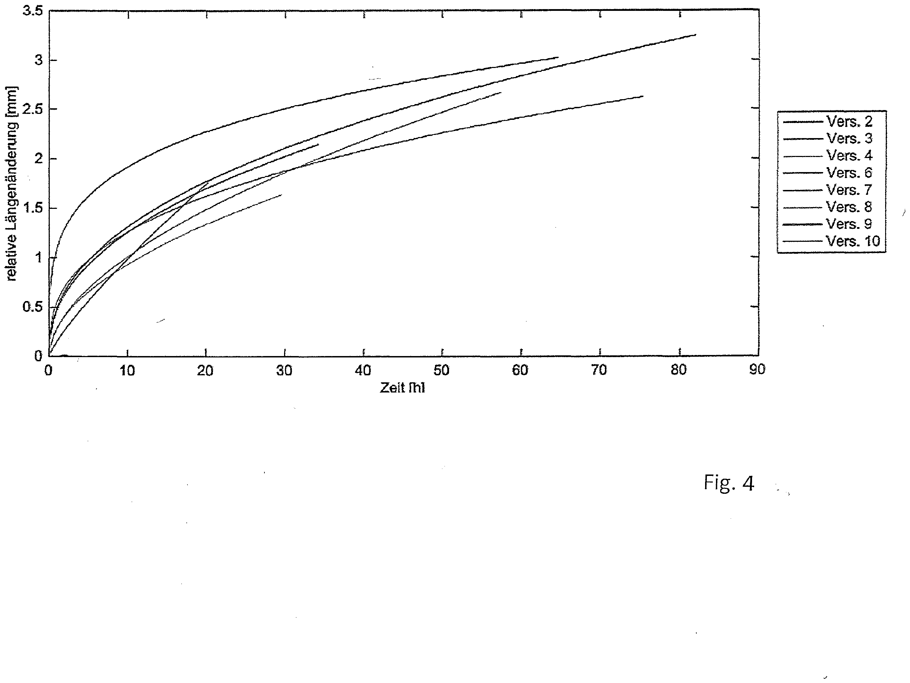

Figur 4 zeigt ein Diagramm mit mehreren Messkurven, von denen jede einen Versuch repräsentiert. Aufgetragen ist der Weg einer Verstellung des verstellbaren Laufrads 4 beim Konstanthalten der Spannung des Sägebands 5 über die Zeit. Es wurden mehrere Sägebänder im Neuzustand in dieselbe Bandsägemaschine bzw. auf die beiden Laufräder 3, 4 aufgezogen und gespannt, wonach der Verstellweg des Laufrads 4 auf Null gesetzt wurde. Sodann wurden die Sägebänder 5 im Leerlauf, also ohne ein Werkstück zu sägen, bis zum Bandabriss auf der Sägemaschine betrieben.

Wie anhand Figur 4 zu erkennen ist, ergab sich eine große Streuung der Lebensdauer der Sägebänder bis zum Bandabriss, von ca. 20 Stunden bis ca. 80 Stunden, obwohl es sich um Sägebänder desselben Typs und derselben Abmessungen handelte, vorliegend mit 54 mm Rückenhöhe, jeweils auf derselben Bandsägemaschine. Erfindungsgemäß ist jedoch erkannt worden, dass der Bandabriss immer erst nach einem Verfahrweg des verstellbaren Laufrads 4 von mindestens 1,5 mm erfolgte, ob dies bereits nach 20 oder erst nach 30 Stunden der Fall war.

Somit ist mit äußerst kostengünstigen und robusten Wegsensoren, die nur auf ein Zehntel Millimeter genau messen müssen, das Erstellen einer Prognose über den frühesten Zeitpunkt eines Bandabrisses möglich. Im vorliegenden Beispiel könnte ein Absolutgrenzwert der zurückgelegten Wegstrecke von 1,4 bis 1,5 mm herangezogen werden, um eine Prognose dahingehend erstellen zu können, dass mit hoher Wahrscheinlichkeit ein Bandabriss nicht innerhalb der nächsten 2 bis 3 Stunden zu befürchten ist.

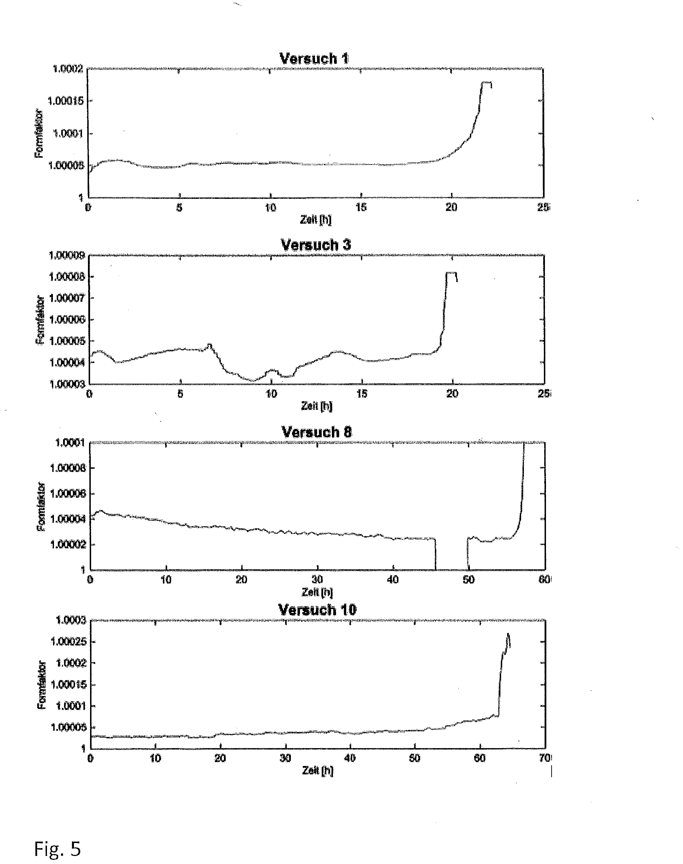

In Figur 5 sind Messdiagramme von Messwerten dargestellt, die von dem als Dehnmessstreifen ausgestalteten Wegsensor 9 an der Halteplatte 11 der Bandführungseinrichtung 7 stammen und in einen Formfaktor umgerechnet wurden, der der Spannung in der Halteplatte 11 entspricht. Dieser Formfaktor ist in den Diagrammen über der Zeit in Stunden aufgetragen. Auch hier wurden wieder unterschiedliche Sägebänder desselben Typs und derselben Abmessungen auf derselben Bandsägemaschine im Leerlauf vom Neuzustand bis zum Bandabriss betrieben.

Wie in Figur 5 zu erkennen ist, zeigen die Werte des Formfaktors etwa 1 bis 3 Stunden vor dem Bandabriss einen deutlichen Anstieg. Dieser kann dazu verwendet werden, um einen Absolutgrenzwert für den Formfaktor zu definieren, oberhalb dessen die Wahrscheinlichkeit, dass ein Bandabriss innerhalb der nächsten 1 bis 3 Stunden erfolgt, sehr groß ist. Alternativ oder ergänzend kann auch ein Relativgrenzwert der Veränderung der Spannung definiert werden, der wiederum anzeigt, dass sich der Formfaktor und damit die Spannung in der Halteplatte 11 beschleunigt verändert und bis in 1 bis 3 Stunden mit einem Bandabriss zu rechnen ist.

Erfindungsgemäß ist also erkannt worden, dass es gar nicht notwendig ist, das Sägeband direkt zu detektieren, um Eigenschaften oder das Verhalten des Sägebands beim Betrieb in der Sägemaschine zu überwachen, die Rückschluss darauf geben, wie lange es noch dauern wird, bis ein Bandabriss droht, und die somit eine Prognose über den Zeitpunkt eines Bandabrisses ermöglichen. EQs reicht vielmehr aus, Veränderungen an Bauteilen der Sägemaschine zu detektieren, die mit dem Sägeband in Wirkverbindung stehen.

Des Weiteren ist im Rahmen der vorliegenden Erfindung ein einfacher Zusammenhang zwischen einem sehr wahrscheinlich bevorstehenden Bandabriss und einer zunehmenden Längung des Sägebands oder einer abnehmenden Torsionsspannung desselben im Betrieb der Sägemaschine erkannt worden, wobei diese Eigenschaften des Sägebands indirekt an Bauteilen erkannt werden kann, die mit dem Sägeband in Wirkverbindung stehen. Es ist also erfindungsgemäß nicht mehr nötig, das Sägeband mittels aufwendiger und fehleranfälliger Sensorik direkt zu überwachen.

### Bezugszeichenliste

- 1: Sägenunterteil
- 2: Sägenoberteil
- 3: Laufrad (fest)
- 4: Laufrad (verstellbar)
- 5: Sägeband
- 6: Sägebereich
- 7: Bandführungseinrichtung
- 8: Spanneinrichtung
- 9: Wegsensor
- 10: Bandführungsrollen
- 11: Halteplatte
- F: Kraft
- M: Drehmoment

## Patentansprüche

1. Verfahren zum Vorhersagen der Restlebensdauer eines Sägebands (5) in einer Bandsägemaschine, wobei das Verhalten oder Eigenschaften des in der Sägemaschine eingespannten Sägebands (5) während des Betriebs der Sägemaschine mittels mindestens einer Sensoreinrichtung überwacht werden, und wobei anhand von Messsignalen der Sensoreinrichtung festgestellte Änderungen des Verhaltens oder von Eigenschaften des Sägebands (5) über die Zeit für eine Prognose über den Zeitpunkt eines Bandabrisses verwendet werden,
**dadurch gekennzeichnet,**
**dass** mit der mindestens einen Sensoreinrichtung das Verhalten oder Eigenschaften des Sägebands (5) durch Detektieren von Veränderungen an Bauteilen der Sägemaschine, die mit dem Sägeband (5) in Wirkverbindung stehen, indirekt überwacht werden.

2. Verfahren nach Anspruch 1,
**dadurch gekennzeichnet,**
**dass** als Sensoreinrichtung eine Einrichtung zur indirekten Erfassung einer Längung des Sägebands (5) verwendet wird.

3. Verfahren nach einem der Ansprüche 1 oder 2,
**dadurch gekennzeichnet,**
**dass** mit der Sensoreinrichtung eine Wegveränderung an einer Spanneinrichtung (8) für das Sägeband (5) und/oder eine Veränderung einer Spannung in einer Bandführungseinrichtung (7) oder einer elastischen Verformung der Bandführungseinrichtung (7) überwacht wird.

4. Verfahren nach Anspruch 3,
**dadurch gekennzeichnet,**
**dass** als Sensoreinrichtung mindestens ein Wegsensor (9), insbesondere mindestens ein Drehgeber, Seilzuggeber oder Dehnmessstreifen, oder ein Kraftmessgeber verwendet wird.

5. Verfahren nach Anspruch 3,
**dadurch gekennzeichnet,**
**dass** als Sensoreinrichtung ein als Elektromotor mit Positionsgeber ausgestalteter Antrieb der Spanneinrichtung (8) verwendet wird.

6. Verfahren nach mindestens einem der Ansprüche 1 bis 5,
**dadurch gekennzeichnet,**
**dass** mit der Sensoreinrichtung eine Wegveränderung an der Spanneinrichtung (8) für das Sägeband (5) überwacht wird, und dass beim Erreichen eines vorbestimmten Absolutgrenzwertes einer zurückgelegten Wegstrecke oder beim Erreichen eines vorbestimmten Relativgrenzwertes der Wegveränderung ein Warnhinweis oder eine Prognose generiert wird.

7. Verfahren nach mindestens einem der Ansprüche 1 bis 6,
**dadurch gekennzeichnet,**
**dass** mit der Sensoreinrichtung eine Veränderung der Spannung in der Bandführungseinrichtung (7) oder einer elastischen Verformung der Bandführungseinrichtung (7) überwacht wird, und dass bei einem vorbestimmten Relativgrenzwert für die Veränderung und/oder bei Erreichen eines vorbestimmten Absolutgrenzwertes der elastischen Verformung oder Spannung ein Warnhinweis oder eine Prognose generiert wird.

8. Verfahren nach einem der Ansprüche 6 oder 7,
**dadurch gekennzeichnet,**
**dass** der vorbestimmte Absolutgrenzwert einer zurückgelegten Wegstrecke an der Spanneinrichtung (8) und/oder der elastischen Verformung der Bandführungseinrichtung (7) oder der Spannung in der Bandführungseinrichtung (7) durch eine Versuchsreihe mit Sägebändern desselben Typs und derselben Abmessungen bei konstanter Bandspannung im Leerlaufbetrieb bis zum Bandabriss typ- und abmessungsspezifisch als unterer Wert der Wegstrecke oder der elastischen Verformung oder der Spannung, unterhalb dem mit einer definierten Wahrscheinlichkeit kein Bandabriss erfolgt, ermittelt wird.

9. Verfahren nach einem der Ansprüche 6 oder 7,
**dadurch gekennzeichnet,**
**dass** der vorbestimmte Relativgrenzwert der Wegveränderung oder für die Veränderung der Spannung in der Bandführungseinrichtung (7) oder für die Veränderung der elastischen Verformung der Bandführungseinrichtung (7) durch eine Versuchsreihe mit Sägebändern desselben Typs und derselben Abmessungen bei konstanter Bandspannung im Leerlaufbetrieb bis zum Bandabriss typ- und abmessungsspezifisch als unterer Wert der Veränderung, unterhalb dem mit einer definierten Wahrscheinlichkeit kein Bandabriss erfolgt, ermittelt wird.

10. Bandsägemaschine mit einem um mindestens zwei Laufräder (3, 4) umlaufenden, zwischen diesen gespannten Sägeband (5) und einer Spanneinrichtung (8) für das Sägeband (5), die auf mindestens eines der Laufräder (4) einwirkt und durch Verändern des Abstands zwischen den Laufrädern (3, 4) die Spannung des Sägebands (5) im Wesentlichen konstant hält,
**gekennzeichnet durch**
eine Sensoreinrichtung zum Detektieren von Veränderungen an Bauteilen der Sägemaschine, die mit dem Sägeband (5) direkt oder indirekt in Verbindung stehen, zur Durchführung eines Verfahrens nach mindestens einem der Ansprüche 1 bis 9, und durch eine Auswerteeinheit zum Auswerten von detektierten Werten und Generieren eines Warnhinweises oder einer Prognose.

11. Bandsägemaschine nach Anspruch 10,
**dadurch gekennzeichnet,**
**dass** die Sensoreinrichtung zum Detektieren von Veränderungen an Bauteilen der Sägemaschine eine Sensoreinrichtung zur indirekten Erfassung einer Längung des Sägebands (5) ist.

12. Bandsägemaschine nach einem der Ansprüche 10 oder 11,
**dadurch gekennzeichnet,**
**dass** die Sensoreinrichtung zum Überwachen einer Wegveränderung an einer Spanneinrichtung für das Sägeband (5) und/oder einer Veränderung einer Spannung in einer Bandführungseinrichtung (7) oder einer elastischen Verformung der Bandführungseinrichtung (7) ausgebildet ist.

13. Bandsägemaschine nach mindestens einem der Ansprüche 10 bis 12,
**dadurch gekennzeichnet,**
**dass** die Sensoreinrichtung mindestens einen Wegsensor (9), insbesondere mindestens einen Drehgeber, Seilzuggeber oder Dehnmessstreifen, oder einen Kraftmessgeber enthält.

14. Bandsägemaschine nach mindestens einem der Ansprüche 10 bis 13,
**dadurch gekennzeichnet,**
**dass** die Sensoreinrichtung zum Überwachen einer Wegveränderung an der Spanneinrichtung (8) für das Sägeband (5) ausgebildet ist, und dass die Auswerteeinheit Mittel enthält, die bei einem von der Sensoreinrichtung gemeldeten Erreichen eines vorbestimmten Absolutgrenzwertes einer zurückgelegten Wegstrecke oder beim Erreichen eines vorbestimmten Relativgrenzwertes der Wegveränderung einen Warnhinweis oder eine Prognose generieren.

15. Bandsägemaschine nach mindestens einem der Ansprüche 10 bis 14,
**dadurch gekennzeichnet,**
**dass** die Sensoreinrichtung zum Überwachen einer Veränderung der Spannung in der Bandführungseinrichtung (7) oder einer elastischen Verformung der Bandführungseinrichtung (7) ausgebildet ist, und dass die Auswerteeinheit Mittel enthält, die bei einem von der Sensoreinrichtung gemeldeten Erreichen eines vorbestimmten Relativgrenzwertes für die Veränderung und/oder bei Erreichen eines vorbestimmten Absolutgrenzwertes der elastischen Verformung oder Spannung einen Warnhinweis oder eine Prognose generieren.
